# EUROPEAN PATENT APPLICATION

(11) **EP 4 736 614 A1**
(43) Date of publication of application: **06.05.2026**
(21) Application number: 25207391.1
(22) Date of filing: 08.10.2025
(51) Int. Cl.: A01C 7/04

(54) **SEED METER ASSEMBLY, AGRICULTURAL PLANTING MACHINE AND METHOD WITH SUCH**

(30) Priority: 31.10.2024 US 202463714446 P; 30.09.2025 US 202519346506
(71) Applicant: Deere & Company, Moline, IL 61265 (US)
(72) Inventor: Garner, Elijah B., Mannheim (DE)
(74) Representative: Reichert, Christian

(57) **Abstract**

A seed meter assembly (24) for an agricultural planting machine (10) is disclosed. The seed metering assembly (24), comprising a vacuum chamber housing (28) defining a vacuum chamber (30); a seed meter housing (32); and a seed metering member (26) mounted for rotation with respect to the seed meter housing (32); wherein at least a portion of the vacuum chamber housing (28) is movably mounted relative to the seed meter housing (32); and wherein the at least a portion of the vacuum chamber housing (28) is movable in response to a vacuum force (98) operable to adhere seeds to the seed metering member (26). Further, an agricultural planting machine (10) with such, and a method of operating such meter assembly is disclosed.

## Description

### TECHNICAL FIELD

The present disclosure relates generally to an agricultural planting machine, such as a row crop planter for agricultural applications. The disclosure also relates to a seed meter assembly for the agricultural planting machine.

### BACKGROUND

Seed meters are used for singulating and metering seeds for planting. A plurality of seed meters may be mounted to an agricultural planting machine for planting more than one row of crop at a time.

### SUMMARY

In some pneumatic seed metering systems, it may be advisable to adjust the hub height of the element that supports the main metering member when crop changes occur, for example while changing from a corn seed bowl to a soybean bowl or to a canola seed bowl. Adjustment may be done by hand. Hub-height adjustment may be performed to get the right fit of the metering member against the meter housing due to slight differences in molding processes, or machining, etc. Additionally, different crops may call for different degrees of rigor in getting this fit tuned. For example, smaller seeds may encounter more challenges when there is spacing from looseness between the metering member and the meter housing, so it may be more time-consuming to adjust the hub height when smaller seeds are being metered. Furthermore, when the pneumatics are activated, the vacuum force on the seed metering member for adhering seeds thereto may act to pull the metering member away from the meter housing, creating a gap therebetween when the metering assembly is activated which may be disruptive to seed flow. On the other hand, when the metering member is adjusted too tightly to the housing, excessive power consumption, meter stalling, and/or excessive wear may result. Thus, the operator may spend time trying to find a balance. The number of row units on a planting machine may be high (e.g., from 16 to 72 or possibly more), so it may be time-consuming to adjust the hub-height in every seed meter every time a crop change is performed.

In one aspect, the disclosure may relate to a seed meter assembly having an improved fit between the metering member and the meter housing. In another aspect, the disclosure may relate to a seed meter assembly that, without manual adjustment, provides an improved fit between the metering member and the meter housing. In another aspect, the disclosure may relate to a seed meter assembly that counteracts a vacuum force on the seed metering member that may act to separate the seed metering member from the meter housing.

According to an aspect of the present disclosure, a seed meter assembly may include a vacuum chamber housing defining a vacuum chamber. The seed meter assembly may also include a seed meter housing and a seed metering member mounted for rotation with respect to the seed meter housing. At least a portion of the vacuum chamber housing may be movably mounted relative to the seed meter housing. The at least a portion of the vacuum chamber housing may be movable in response to a vacuum force operable to adhere seeds to the seed metering member.

According to another aspect of the present disclosure is a method of counteracting a vacuum force for adhering seeds to a seed metering member. The method may include mounting the seed metering member for rotation with respect to a seed meter housing. The method may also include movably mounting at least a portion of a vacuum chamber housing relative to the seed meter housing so as to be movable in response to the vacuum force.

According to an aspect of the present disclosure, an agricultural planting machine may include a seed meter assembly. The seed meter assembly may include a vacuum chamber housing defining a vacuum chamber, a seed meter housing, and a seed metering member mounted for rotation with respect to the seed meter housing. At least a portion of the vacuum chamber housing may be movably mounted relative to the seed meter housing. The at least a portion of the vacuum chamber housing may be movable in response to a vacuum force operable to adhere seeds to the seed metering member. Other features and aspects will become apparent by consideration of the detailed description, claims, and accompanying drawings.

### BRIEF DESCRIPTION OF THE DRAWINGS

The detailed description of the drawings refers to the accompanying figures.
FIG. 1 is a top view of an agricultural planting machine having a plurality of row units.
FIG. 2 is a perspective exploded view of a seed meter assembly of one of the row units of the agricultural planting machine of FIG. 1.
FIG. 3 is a cross-sectional view of the seed meter assembly of FIG. 2 in a first position.
FIG. 4 is a cross-sectional view of the seed meter assembly of FIG. 2 in a second position.
FIG. 5 is a cross-sectional view of another implementation of the seed meter assembly of FIG. 2.

Like reference numerals may be used to indicate like elements throughout the several figures.

### DETAILED DESCRIPTION

Before any implementations of the disclosure are explained in detail, it is to be understood that the disclosure is not limited in its application to the details of construction and the arrangement of components set forth in the following description or illustrated in the accompanying drawings. The disclosure is capable of supporting other implementations and of being practiced or of being carried out in various ways.

In the Detailed Description herein, references to an "implementation," an "aspect," and an "example," etc., indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic may be described in connection with an implementation, it may be submitted that it may be within the knowledge of one skilled in art to affect such feature, structure, or characteristic in connection with other implementations whether or not explicitly described.

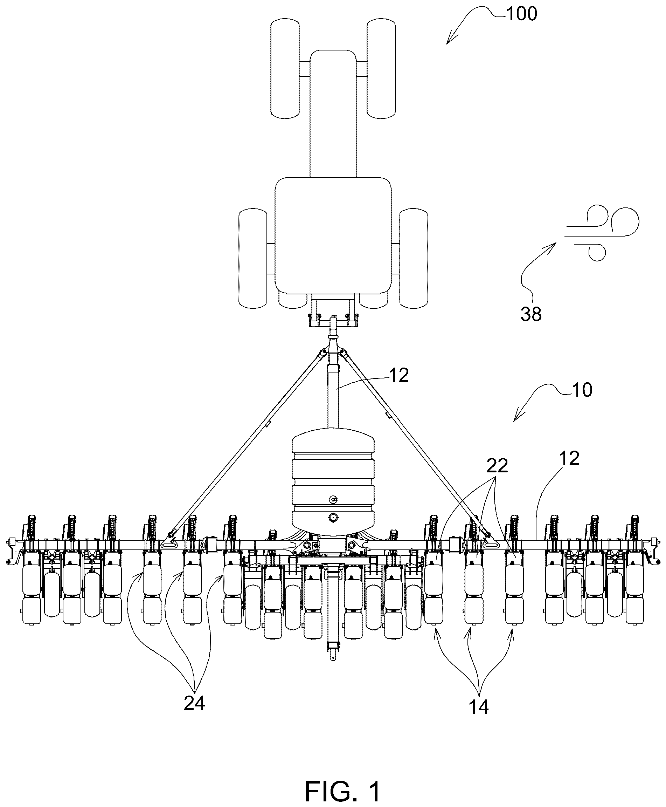

FIG. 1 illustrates an agricultural planting machine 10, such as a row crop planter, pulled by a vehicle 100, such as a tractor. The agricultural planting machine 10 may have a frame 12 on which there may be mounted one or more individual row units 14.

Each row unit 14 may have a row unit frame 22 to which the components of the row unit 14 are mounted. Each row unit frame 22 may be mounted to the frame 12. A seed meter assembly 24 having one or more seed metering members 26 is coupled to each row unit frame 22. The seed meter assembly 24 may have one, two, three or more seed metering members 26 coupled to each row unit frame 22.

The seed meter assembly 24 may include a vacuum chamber housing 28 defining a vacuum chamber 30. The vacuum chamber 30 may be sealed (which may include at least partially sealed) from the ambient environment 38 (such as the air outside the seed meter assembly 24) to maintain an air pressure that is different from the ambient environment 38 (e.g., an air pressure differential) while a pressure differential delivery apparatus 18 is activated. The pressure differential delivery apparatus 18 may include a hose or other conduit that is fluidly connected to a vacuum pump, a compressor, or the like. The pressure in the vacuum chamber 30 may be negative relative to the ambient environment 38. The vacuum chamber housing 28 includes a pressure conduit connector 36 for connecting to the pressure differential delivery apparatus 18. The vacuum chamber 30 may be fluidly coupled to the pressure differential delivery apparatus 18.

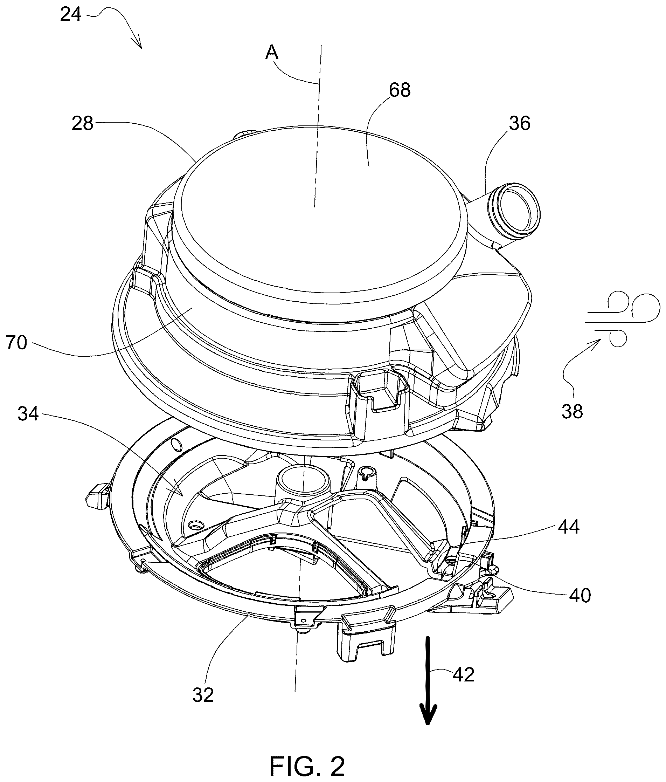

The seed meter assembly 24 may include a seed meter housing 32. The seed meter housing 32 may at least partially define a seed reservoir 34 for holding seeds to be metered. The seed metering member 26 may rotate at least partially within the seed reservoir 34 to pick up seeds from the seed reservoir 34 using an air pressure differential. The seed metering member 26 may be mounted for rotation with respect to the seed meter housing 32. The seed meter housing 32 may define a gullet 40 (FIG. 2) allowing a metered seed from the seed metering member 26 to pass from the seed meter housing 32 towards a seed delivery mechanism 42 (illustrated schematically with an arrow in FIG. 2) located downstream of the seed meter assembly 24. "Downstream" is defined with respect to a travel path of the seeds, where "downstream" is the direction in which the seeds are headed (from the seed meter assembly 24 to the soil) and "upstream" is the direction from which the seeds have come. The gullet 40 may be defined by at least one wall 44 in the seed meter housing 32 that guides the metered seed out of the seed meter assembly 24. The seed meter housing 32 may perform some or all of these functions, in any combination. In other examples, the functions of the seed meter housing 32 may be performed by multiple parts.

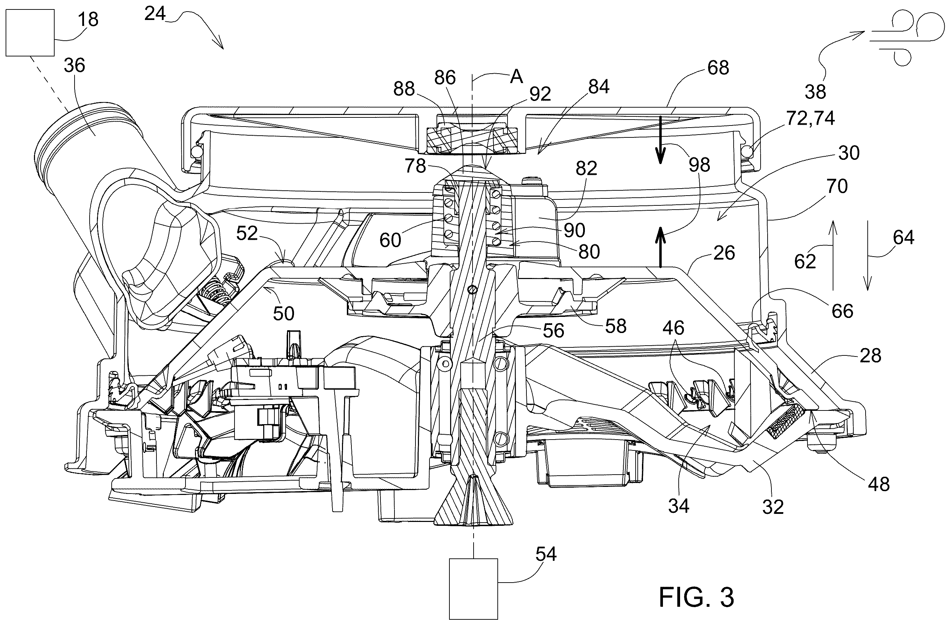

The seed metering member 26 takes seeds from the seed reservoir 34 (FIG. 3) and sequentially discharges metered seeds (e.g., singulated seeds) to the downstream seed delivery mechanism 42 which deposits the seeds onto a soil surface (e.g., a furrow). The seeds may be delivered one at a time, for example. The seed metering member 26 may be in the form of a disk, a bowl, a drum, a wheel, etc. The seed metering member 26 may have apertures 46 that extend therethrough. The apertures 46 are generally arranged to encircle a meter axis A. The apertures 46 may be disposed proximate a circumferential edge 48 of the seed metering member 26. The apertures 46 may pass through the seed metering member 26 from a seed side 50 to a vacuum side 52. The seed side 50 may be opposite the vacuum side 52. The seed side 50 may face the seed reservoir 34. The vacuum side 52 may face the vacuum chamber 30. Thus, by way of the apertures 46, the seed reservoir 34 may be in fluid communication with the vacuum chamber 30 such that the vacuum in the vacuum chamber 30 may act on the seeds in the seed reservoir 34 to adhere the seeds to the seed metering member 26. The pressure differential across the seed metering member 26 (from the seed side 50 to the vacuum side 52) may act on the seeds. The seed metering member 26 may be pulled in a first direction 62 by the vacuum force 98. The first direction 62 may be an axial direction defined by the meter axis A that points from the seed metering member 26 towards the vacuum chamber housing 28.

The seed metering member 26 may be driven to rotate by a drive mechanism 54 (illustrated schematically in FIG. 3), such as an electric motor, a hydraulic motor, a ground wheel or other rotating component that may be mechanically coupled to drive the seed metering member 26, or by any other suitable drive mechanism. The drive mechanism 54 may be configured to drive the seed metering member 26 via a drive shaft 56 defining the meter axis A. The seed metering member 26 may be coupled to the drive shaft 56. As one example, the seed metering member 26 may be coupled to the drive shaft 56 via a hub 58. The hub 58 may be threaded onto the drive shaft 56 or connected in any suitable way.

The seed metering member 26 may be pretensioned into engagement with the seed meter housing 32 at a predetermined force. The predetermined force (which may also be referred to herein as a spring force or a biasing force) is calibrated in factory to establish proper pressure between the seed metering member 26 and the seed meter housing 32. Too much force and the seed metering member 26 may consume too much power to rotate due to increased friction between the seed metering member 26 and the seed meter housing 32, may stall, and/or may wear. Too little force and a gap may form between the seed metering member 26 and the seed meter housing 32 in which seeds may escape or become stuck. As one example, a spring 60 may be employed to pretension the seed metering member 26 against the seed meter housing 32. The spring 60 may include a coil spring, a leaf spring, a torsion spring, an elastic material, a pressurized cylinder and piston (e.g., a gas spring), a biasing member, or any other suitable source of biasing force. The spring 60 may act directly or indirectly on the seed metering member 26. As one example, the spring 60 may apply the predetermined force on the seed metering member 26 via a connector 80. The connector 80 may have any suitable shape or form or location for transferring the predetermined force from the spring 60 to the seed metering member 26. The connector 80 may have a handle 82 configured as a protrusion therefrom for facilitating assembly and disassembly thereof by hand. In the illustrated example, the spring 60 may be braced, on one end, against a flange 78 extending from the drive shaft 56 may rotate with the drive shaft 56 and, on an opposite end, against the connector 80 which may also rotate with the drive shaft 56. Thus, the spring 60 may rotate with the drive shaft 56. In turn, the connector 80 engages (directly or indirectly) the seed metering member 26 to transfer the predetermined force thereto. The predetermined force may act in a second direction 64. The second direction 64 may be an axial direction defined by the meter axis A that points from the seed metering member 26 towards the seed meter housing 32. The second direction 64 may be opposite the first direction 62. The connector 80 may be define a spring receptacle 90 that may receive the spring 60 therein. The connector 80 may include a connector cap 86 that may cap the spring receptacle 90 formed by the connector 80 and/or may define a bearing surface 92 for engaging the bearing 88 during rotation of the bearing surface 92. The bearing surface 92 may, for example, be formed of a hardened material, such as hardened metal, such as hardened steel. The bearing surface 92 may, for example, be formed from a suitable non-ferrous metal or plastic.

The feature, part, or collection of parts connecting the seed meter housing 32 to the seed metering member 26 may be referred to herein as a mechanical linkage 84. The mechanical linkage 84 may establish proper pressure between the seed metering member 26 and the seed meter housing 32. The mechanical linkage 84 may link the movable seed meter housing 32 to the seed metering member 26 in such a way that neutralizes the vacuum force 98 on the seed metering member 26. The mechanical linkage 84 may have any suitable structure. As one example, the mechanical linkage 84 may include any combination of the bearing 88, the connector 80, the spring 60, and the flange 78. It should be understood that the mechanical linkage 84, as well as the seed meter assembly 24 as a whole, may include any number of parts defining some or all of the structures described herein, in any combination. In other words, one of ordinary skill may integrate or separate the structures described herein into any number of suitable parts. In addition, additional parts not described herein may be employed.

The vacuum force may act to pull the seed metering member 26 axially in the first direction 62 towards the vacuum chamber housing 28. The seed metering member 26 may be coupled to the vacuum chamber housing 28 via a metering seal 66. The metering seal 66 may be flexible. As such, when the vacuum is applied, the vacuum force may act to move the seed metering member 26 towards the vacuum chamber housing 28 and away from the seed meter housing 32, thereby compressing the metering seal 66.

At the same time, the vacuum force may pull on the vacuum chamber housing 28 in the second direction 64. The second direction 64 may also be defined as an axial direction defined by the meter axis A that points from the vacuum chamber housing 28 towards the seed metering member 26. The relative movement between the vacuum chamber housing 28 and the seed meter housing 32 may change the internal volume of the vacuum chamber 30 and of the seed meter assembly 24 as a whole. The vacuum chamber housing 28 and the vacuum side 52 of the seed metering member 26 may generally form oppositely-facing walls of the vacuum chamber 30. The oppositely-facing walls face each other, e.g., face towards an inner region of the vacuum chamber 30. Thus, vacuum chamber housing 28 and the vacuum side 52 of the seed metering member 26 may be pulled in opposite directions in reaction to the vacuum force 98 in the vacuum chamber 30. For example, when in vacuum, the vacuum chamber housing 28 and the vacuum side 52 of the seed metering member 26 may each be pulled inwards toward the inner region of the vacuum chamber 30.

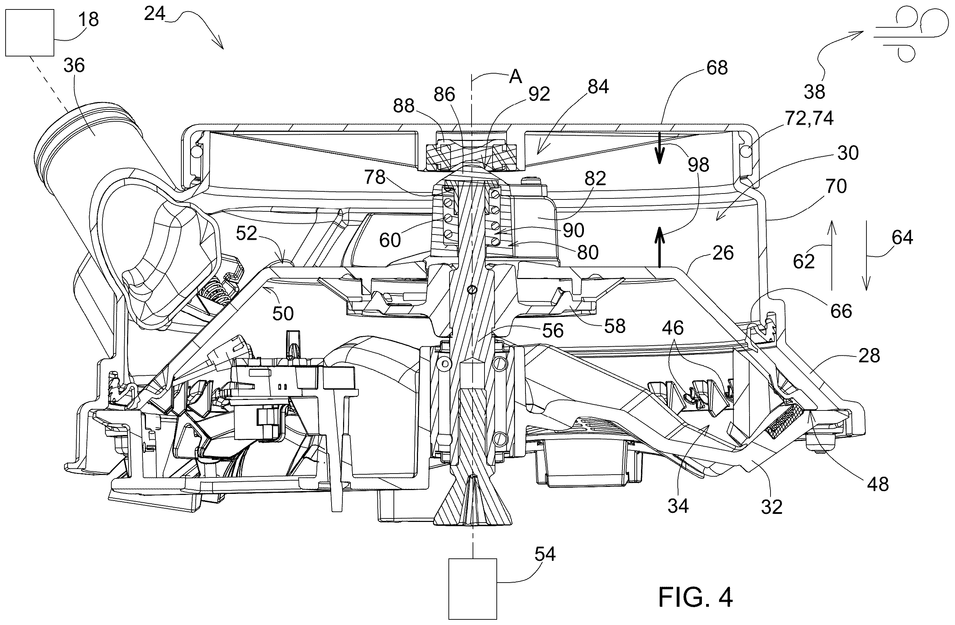

The vacuum chamber housing 28 may be movably mounted so as to be movable in response to a pressure change inside the vacuum chamber 30. The vacuum chamber housing 28 may be movably mounted with respect to the seed meter housing 32. In the illustrated example, the vacuum chamber housing 28 may be formed from two separate rigid parts movable with respect to each other. As illustrated, the two separate rigid parts may include a first rigid vacuum chamber housing portion 68 and a second rigid vacuum chamber housing portion 70. A rigid housing portion is one that moves as a solid body, substantially without appreciable (or with only negligible) flexion within itself, in response to the seed metering pressure differential. The first and second rigid vacuum chamber housing portions 68, 70 may be configured to move parallel to the meter axis A or in any other suitable manner. Relative movement (e.g., as illustrated from FIG. 3 to FIG. 4) between the first rigid vacuum chamber housing portion 68 and the second rigid vacuum chamber housing portion 70 in response to the vacuum force 98 may be substantially more noticeable than any flexion of the rigid parts themselves, which is therefore negligible. Relative movement between the first rigid vacuum chamber housing portion 68 and the second rigid vacuum chamber housing portion 70 may change the internal volume of the vacuum chamber 30. The relative movement may also change the internal volume of the seed meter assembly 24 as a whole, e.g., the internal volume defined within the vacuum chamber housing 28 and the seed meter housing 32 when assembled.. For example, the internal volume is smaller in FIG. 4 than in FIG. 3. Thus, the internal volume is variable in proportion to the movement of the vacuum chamber housing 28.

The first and second rigid vacuum chamber housing portions 68, 70 may be coupled in any suitable way to allow relative movement therebetween while maintaining a sufficient seal to maintain the pressure differential between the vacuum chamber 30 and the ambient environment 38 for metering seeds while the pressure differential delivery apparatus 18 is activated.

As one example, illustrated in FIG. 3, the first and second rigid vacuum chamber housing portions 68, 70 may be connected in a telescoping fashion. The telescoping fashion may include one of the first or second rigid vacuum chamber housing portions 68, 70 nested within the other of the first or second rigid vacuum chamber housing portions 68, 70. The first and second rigid vacuum chamber housing portions 68, 70 may slide (e.g., translate) relative to each other. There may be a flexible vacuum chamber housing portion 72 between the first and second rigid vacuum chamber housing portions 68, 70. The flexible vacuum chamber housing portion 72 may include any suitable structure. The flexible vacuum chamber housing portion 72 may be formed from a flexible material. The flexible vacuum chamber housing portion 72 may be a rolling seal that slides and/or rolls between the first and second rigid vacuum chamber housing portions 68, 70 during relative movement between the first and second rigid vacuum chamber housing portions 68, 70. For example, the flexible vacuum chamber housing portion 72 may include an O-ring 74 that slides and/or rolls during relative movement between the first and second rigid vacuum chamber housing portions 68, 70. The first and second rigid vacuum chamber housing portions 68, 70 may be connected by any other suitable seal.

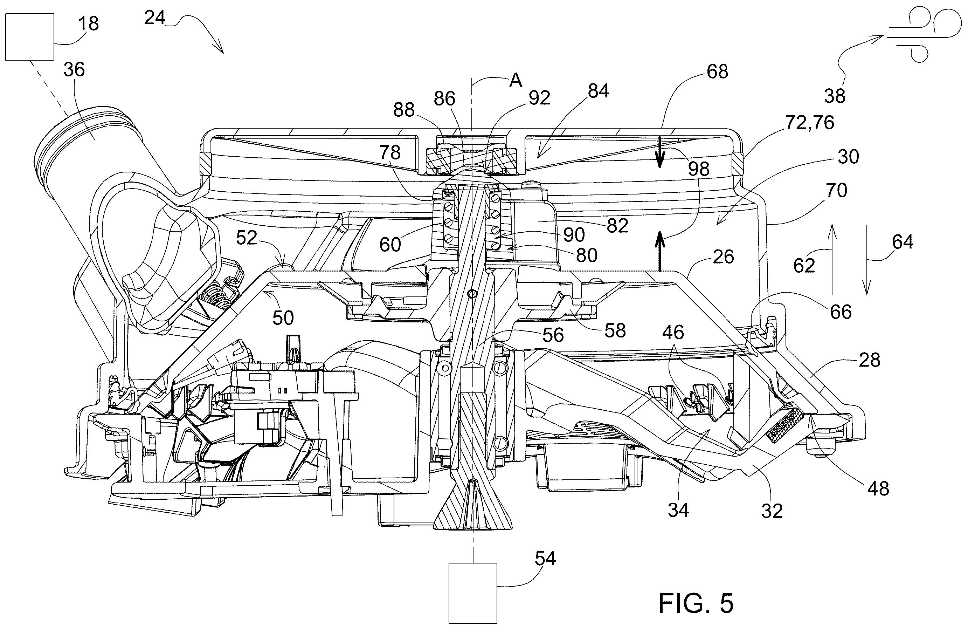

In another example, illustrated in FIG. 5, the flexible vacuum chamber housing portion 72 may include a diaphragm 76 connecting the first rigid vacuum chamber housing portion 68 to the second rigid vacuum chamber housing portion 70. In this example, the first and second rigid vacuum chamber housing portions 68, 70 may be telescoping or not telescoping. As illustrated, the first rigid vacuum chamber housing portion 68 may be adjacent the second rigid vacuum chamber housing portion 70 and connected via the diaphragm 76. The diaphragm 76 may be formed from any suitable flexible material. For example, the diaphragm 76 may be formed from a plastic material, an elastic material, a foam (e.g., closed cell foam), the like, or any combination thereof. For example, the bottom edge of the first rigid vacuum chamber housing portion 68 may be connected to the upper edge of the second rigid vacuum chamber housing portion 70 by the diaphragm. In some embodiments, the diaphragm is a flexible, annual seal that connects the housing pieces, e.g., the edges mentioned (or other portions). The diaphragm or flexible seal may be attached to the distal or distalmost edges of the housing components. Alternatively, the diaphragm or flexible seal may be attached to portions of the housing walls. For example, a first or outer portion of the diaphragm or flexible seal may be attached to an inner wall portion of the first rigid vacuum chamber housing portion 68, e.g., spaced a distance from the distalmost edge of the first rigid vacuum chamber housing portion 68, and a second or inner portion of the diaphragm or flexible seal may be attached to an outer wall portion of the upper edge of the second rigid vacuum chamber housing portion 70, spaced a distance from the distalmost edge of the upper edge of the second rigid vacuum chamber housing portion 70.

Thus, the flexible vacuum chamber housing portion 72 may be operable to facilitate movement of the at least a portion of the vacuum chamber housing 28 in response to the vacuum force 98. The flexible vacuum chamber housing portion 72 may be disposed between the vacuum chamber housing 28 and the seed meter housing 32. In some examples, the flexible vacuum chamber housing portion 72 may be disposed directly between the vacuum chamber housing 28 and the seed meter housing 32. In such examples, the vacuum chamber housing 28 need not necessarily have a two-part form and may be formed as a single solid body movable relative to the seed meter housing 32. However, in other examples, the vacuum chamber housing 28 and the seed meter housing 32 may be formed from any number of separate solid bodies with the flexible vacuum chamber housing portion 72 (or multiple flexible vacuum chamber housing portions 72) being disposed anywhere in the path that serves to connect the vacuum chamber housing 28 to the seed meter housing 32.

Thus, the flexible vacuum chamber housing portion 72 may slide, roll, flex, compress, the like, or any combination thereof, in response to the seed metering vacuum exerting a vacuum force 98 in the second direction 64 to pull the first rigid vacuum chamber housing portion 68 into the vacuum chamber 30 and/or towards the seed metering member 26. Such a flexible vacuum chamber housing portion 72 may allow the first rigid vacuum chamber housing portion 68 to move (as a rigid solid body) with respect to the second rigid vacuum chamber housing portion 70 in response to the pressure differential while maintaining a sufficient seal to maintain a pressure differential between the vacuum chamber 30 and the ambient environment 38 for metering seeds while the pressure differential delivery apparatus 18 is activated. The flexible vacuum chamber housing portion 72 may be annular. In other examples, the flexible vacuum chamber housing portion 72 may have any suitable shape or configuration for allowing relative movement between the first and second rigid vacuum chamber housing portions 68, 70 while sufficiently maintaining the pneumatic seal.

As illustrated in FIGS. 3-5, the vacuum chamber housing 28 (and in some examples, more specifically, the first rigid vacuum chamber housing portion 68 thereof) is mechanically coupled to exert a counteracting force on the seed metering member 26. The vacuum chamber housing 28 may be mechanically coupled to exert the counteracting force directly or indirectly on the seed metering member 26. As one example, movement of the first rigid vacuum chamber housing portion 68 relative to the second rigid vacuum chamber housing portion 70 (e.g., in the second direction 64) pushes on the seed metering member 26 to urge the seed metering member 26 towards the seed meter housing 32 (e.g., in the second direction 64), thereby counteracting the vacuum force pulling the seed metering member 26 away from the seed meter housing 32 (e.g., in the first direction 62). The counteracting force, e.g., facilitated by the vacuum chamber housing 28 being movably mounted, may help maintain engagement between the seed metering member 26 and the seed meter housing 32. Any suitable mechanical linkage 84 may be disposed between the vacuum chamber housing 28 and the seed metering member 26 for transferring force from the vacuum chamber housing 28 to the seed metering member 26, or no mechanical linkage 84 may be employed in some examples (e.g., some portion of the movably mounted vacuum chamber housing 28 may directly engage the seed metering member 26, for example by way of a bearing surface therebetween). In the illustrated examples of FIGS. 3-5, a bearing 88 (e.g., a rotary bearing such as a hardened cup, a bushing, a flange bearing, a ball bearing, a needle bearing, a roller bearing, etc.) is coupled to vacuum chamber housing 28 to move with the vacuum chamber housing 28, e.g., with the first vacuum chamber housing portion 68. The bearing 88 may bear against the connector 80 as the connector 80 rotates. Thus, the counteracting force may be passed from the vacuum chamber housing 28 to the connector 80 by way of the bearing 88. In turn, the connector 80 may transfer the counteracting force to the seed metering member 26, e.g., by direct or indirect contact therebetween. As illustrated, the connector 80 may be in direct contact with the seed metering member 26.

In operation, aspects of, or methods for, the arrangement of the seed meter assembly 24 may counteract the vacuum force 98 on the seed metering member 26 for adhering seeds to the seed metering member 26, such as movably mounting at least a portion of the vacuum chamber housing 28 relative to the seed meter housing 32 so as to be movable in response to the vacuum force 98. In another aspect, configuring the at least a portion of the vacuum chamber housing 28 to apply a counteracting force on the seed metering member 26 when the vacuum is active. In another aspect, pre-tensioning the seed metering member 26 against the seed meter housing 32 using the spring 60. Other aspects of the arrangement(s) and methods described above may also facilitate counteracting the vacuum force 98 on the seed metering member 26.

For example, the vacuum chamber housing 28, or a portion thereof (e.g., the first vacuum chamber housing portion 68), which may be movably mounted with respect to the seed meter housing 32, may move towards the seed metering member 26 when acted upon by the vacuum force 98. This movement may exert the counteracting force on the seed metering member 26, which may cancel out how the vacuum force 98 acts on the seed metering member 26. Thus, the counteracting force may be proportional to and opposite to the vacuum force 98 acting on the seed metering member 26 to adhere seeds thereto. Indeed, the counteracting force may be generated from the vacuum force 98 itself but directed onto the seed metering member 26 in a direction that is opposite to the direction in which the vacuum force 98 acts on the seed metering member 26. Thus, the vacuum force 98 acting on the seed metering member 26 is canceled out. With the vacuum force neutralized, the predetermined force acting on the seed metering member 26, as applied by the spring 60, may act on the seed metering member 26 substantially undisrupted to provide a predetermined fit against the seed meter housing 32. Thus, the spring 60 can be used to establish the pressure of the seed metering member 26 against the seed meter housing 32 without operator adjustments and without being affected by the vacuum force 98 during operation. Thus, the seed meter assembly 24 may have an adjustless fit. This may lower the skill-level and know-how needed to operate the seed meter assembly 24 at a desired level of performance.

## Claims

1. A seed meter assembly (24) for an agricultural planting machine (10), comprising:
a vacuum chamber housing (28) defining a vacuum chamber (30);
a seed meter housing (32); and
a seed metering member (26) mounted for rotation with respect to the seed meter housing (32);
wherein at least a portion of the vacuum chamber housing (28) is movably mounted relative to the seed meter housing (32); and
wherein the at least a portion of the vacuum chamber housing (28) is movable in response to a vacuum force (98) operable to adhere seeds to the seed metering member (26).

2. The seed meter assembly (24) of Claim 1, wherein an internal volume of the seed meter assembly (24) is variable in proportion to the movement of the at least a portion of the vacuum chamber housing (28).

3. The seed meter assembly (24) of Claim 1 or 2, wherein the at least a portion of the vacuum chamber housing (28) is axially movably mounted so as to be movable in an axial direction (62) of meter axis (A) of the seed metering member (26) in response to the vacuum force (98).

4. The seed meter assembly (24) of one of the Claims 1 to 3, wherein the vacuum chamber housing (28) includes a first rigid vacuum chamber housing portion (68) and a second rigid vacuum chamber housing portion (70), wherein the at least a portion of the vacuum chamber housing (28) includes the first rigid vacuum chamber housing portion (68), wherein the first rigid vacuum chamber housing portion (68) is movably connected to the second rigid vacuum chamber housing portion (70) such that the first rigid vacuum chamber housing portion (68) moves with respect to the second rigid vacuum chamber housing portion (70) in response to the vacuum force (98).

5. The seed meter assembly (24) of Claim 4, wherein the movement of the first rigid vacuum chamber housing portion (68) changes the volume of the vacuum chamber (30).

6. The seed meter assembly (24) of one of the Claims 1 to 5, further comprising a flexible vacuum chamber housing portion (72) operable to facilitate movement of the at least a portion of the vacuum chamber housing (28) in response to the vacuum force (98).

7. The seed meter assembly (24) of one of the Claims 1 to 6, wherein the at least a portion of the vacuum chamber housing (28) includes the entire vacuum chamber housing (28).

8. The seed meter assembly (24) of one of the Claims 1 to 7, wherein the at least a portion of the vacuum chamber housing (28) is mechanically coupled so as to exert a force on the seed metering member (26) when the at least a portion of the vacuum chamber housing (28) is acted upon by the vacuum force (98).

9. The seed meter assembly (24) of Claim 8, wherein the force counteracts the vacuum force (98) acting on the seed metering member (26).

10. The seed meter assembly (24) of one of the Claims 1 to 9, wherein the seed meter housing (32) defines a gullet (40) through which metered seeds pass from the seed metering member (26) to a downstream seed delivery mechanism (42).

11. The seed meter assembly (24) of one of the Claims 1 to 10, further comprising a spring (60) biasing the seed metering member (26) towards the seed meter housing (32).

12. An agricultural planting machine (10), comprising a seed meter assembly (24) according to one of the claims 1 to 11.

13. A method of operating a seed meter assembly (24) with counteracting a vacuum force (98) for adhering seeds to a seed metering member (26) of a seed meter assembly (24) of one of the claims 1 to 11, the method further comprising:
mounting the seed metering member (26) for rotation with respect to the seed meter housing (32); and
movably mounting at least a portion of a vacuum chamber housing (28) relative to the seed meter housing (32) so as to be movable in response to the vacuum force (98).

14. The method of Claim 13, further comprising configuring the at least a portion of a vacuum chamber housing (28) to apply a counteracting force on the seed metering member (26) when the vacuum force (98) is activated.

15. The method of Claim 13 or 14, further comprising pre-tensioning the seed metering member (26) against the seed meter housing (32) using a spring (60).
